# EUROPEAN PATENT APPLICATION

(11) **EP 3 333 604 A1**
(43) Date of publication of application: **13.06.2018**
(21) Application number: 16832825.0
(22) Date of filing: 25.07.2016
(51) Int. Cl.: G02B 6/02, C03B 37/028, G02B 6/036, G02B 6/06

(54) **MULTICORE OPTICAL FIBER AND METHOD FOR PRODUCING MULTICORE OPTICAL FIBER**

(30) Priority: 04.08.2015 JP 2015154212; 11.04.2016 JP 2016078959
(71) Applicant: Fujikura Ltd., Tokyo 135-8512 (JP)
(72) Inventor: ENDOH Yutaka, Sakura-shi Chiba 285-8550 (JP); TORIYA Tomoaki, Sakura-shi Chiba 285-8550 (JP); IZOE Katsuaki, Sakura-shi Chiba 285-8550 (JP); KUDOH Manabu, Sakura-shi Chiba 285-8550 (JP); SHIMOMICHI Tsuyoshi, Sakura-shi Chiba 285-8550 (JP)
(74) Representative: Cabinet Plasseraud
(86) International application number: PCT/JP2016/071717
(87) International publication number: WO 2017/022546

(57) **Abstract**

A multicore optical fiber, includes: a core which is formed of silica glass doped with at least fluorine, the core having a relative refractive index difference with respect to a refractive index of silica as a reference being -0.30% to -0.10%; and a clad that is formed of silica glass doped with at least fluorine, the clad including a first clad surrounding an outer periphery of the core and a second clad provided outside the first clad, in which a relative refractive index difference between the first clad and the core is 0.8% or more, and a refractive index of the second clad is higher than a refractive index of the first clad and lower than a refractive index of the core.

## Description

### TECHNICAL FIELD

The present invention relates to a multicore optical fiber and a method of producing a multicore optical fiber.

Priority is claimed on Japanese Patent Application No. 2015-154212, filed on August 4, 2015, and 2016-078959, filed on April 11, 2016, the content of which is incorporated herein by reference.

### BACKGROUND ART

For image observation using a silica-based multicore optical fiber under the radiation environment, a camera sensitive to near-infrared light in a near-infrared light region (approximately 800 nm to approximately 1100 nm) is mainly used. The image obtained by the camera is a monochrome image without color information.

Patent Document 1 discloses an image fiber in which each pixel forming the image fiber has a three-layer structure of a core, a clad, and a support layer, the core contains chlorine (CI) for increasing the refractive index, the clad contains fluorine (F), and the support layer is formed of high-purity silica glass doped with halogen or pure silica glass.

### PRIOR ART DOCUMENTS

### PATENT DOCUMENTS

[Patent Document 1] Japanese Unexamined Patent Application, First Publication No. H5-229842

### SUMMARY OF THE INVENTION

### PROBLEMS TO BE SOLVED BY THE INVENTION

Under the radiation environment, a transmission loss increase amount in the visible light region is larger than a transmission loss increase amount in the near-infrared light region. Therefore, in a case where a conventional silica-based multicore optical fiber is placed under the radiation environment and observed in the visible light region, the image becomes dark and blurred in a relatively short time. For this reason, it has been difficult to observe the image of the conventional silica-based multicore optical fiber in the visible light region.

The present invention has been made in view of the above circumstances, and it is an object of the present invention to provide a multicore optical fiber suitable for image observation in the visible light region and a method of producing a multicore optical fiber.

### MEANS FOR SOLVING THE PROBLEMS

In order to solve the aforementioned problem, a multicore optical fiber according to a first aspect of the present invention includes: a core which is formed of silica glass doped with at least fluorine, the core having a relative refractive index difference with respect to a refractive index of silica as a reference being -0.30% to -0.10%; and a clad that is formed of silica glass doped with at least fluorine, the clad including a first clad surrounding an outer periphery of the core and a second clad provided outside the first clad, in which a relative refractive index difference between the first clad and the core is 0.8% or more, and a refractive index of the second clad is higher than a refractive index of the first clad and lower than a refractive index of the core.

At least one of the core and the clad may be doped with hydrogen.

A fluorine concentration of the core may be 0.4 to 1.2 wt%.

A diameter of the core may be 1.0 to 10 µm, and a distance between centers of adjacent cores may be 3.0 to 15 µm.

A transmission loss increase amount in a case where a radiation dose is 2 MGy may be 2 dB/m or less at a wavelength of 400 nm.

A numerical aperture may be 0.1 or more and 0.45 or less.

A method of producing a multicore optical fiber according to a second aspect of the present invention is a method of producing the multicore optical fiber described above. The method includes: preparing a single-core optical fiber having a core and a clad, the clad including a first clad surrounding an outer periphery of the core and a second clad surrounding an outer periphery of the first clad, the second clad being an outermost layer; preparing a plurality of the single-core optical fibers and arranging the plurality of the single-core optical fibers in a jacket tube; and obtaining a multicore optical fiber by collapsing the jacket tube onto each of clads in the plurality of the single-core optical fibers by melting and elongating the plurality of the single-core optical fibers and the jacket tube.

### Effects of Invention

According to the above aspects of the present invention, since an increase in transmission loss in the visible light region under the radiation environment is low, it is possible to provide a multicore optical fiber suitable for image observation in the visible light region and a method of producing the multicore optical fiber.

### BRIEF DESCRIPTION OF THE DRAWINGS

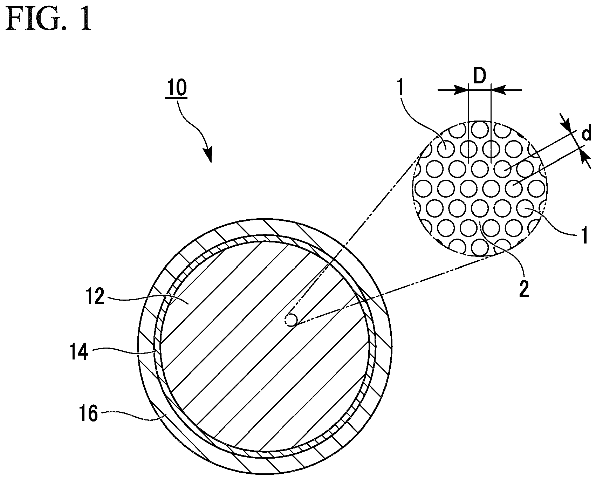

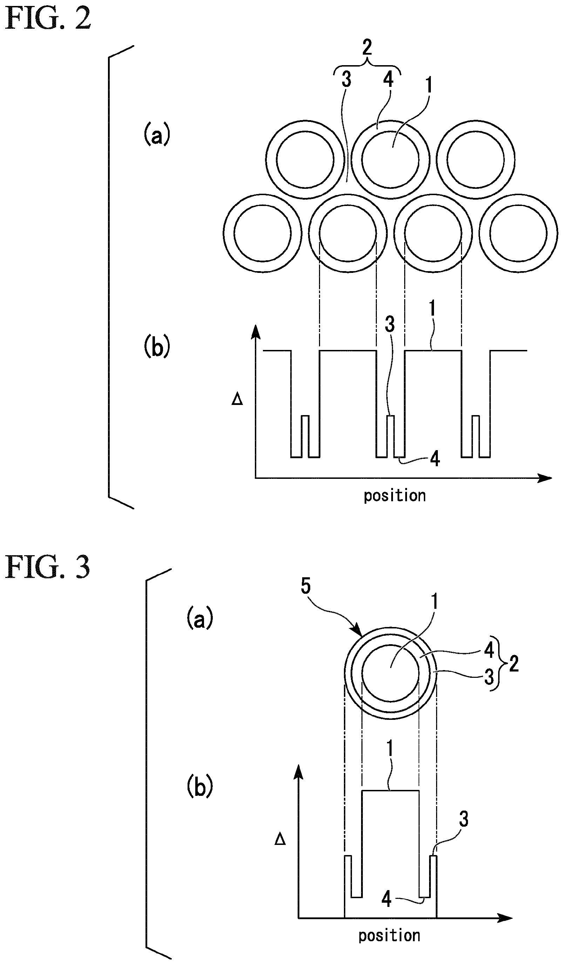

FIG. 1 is a cross-sectional view showing an example of a multicore optical fiber.
Part (a) of FIG. 2 is a partial cross-sectional view showing an example of a multicore optical fiber according to an embodiment of the present invention, and part (b) of FIG. 2 is a graph showing an example of the refractive index profile corresponding to part (a) of FIG. 2.
Part (a) of FIG. 3 is a cross-sectional view showing an example of a single-core optical fiber, and part (b) of FIG. 3 is a graph showing an example of the refractive index profile of the single-core optical fiber.
FIG. 4 is a perspective view showing an example of a method of producing a multicore optical fiber.
FIG. 5 is a graph showing the amounts of increase in transmission loss of a multicore optical fiber of Example 1 and a multicore optical fiber of Comparative Example 1 in a case where the radiation dose is 2 MGy.
FIG. 6 is a graph showing the amounts of increase in transmission loss of a multicore optical fiber of Example 2 and a multicore optical fiber of Comparative Example 2 in a case where the radiation dose is 180 kGy.

### EMBODIMENTS FOR CARRYING OUT THE INVENTION

Hereinafter, the present invention will be described with reference to the accompanying drawings based on a preferred embodiment. FIG. 1 is a cross-sectional view showing an example of a multicore optical fiber 10 according to an embodiment of the present invention. The multicore optical fiber 10 is an example of an image transmission fiber (image fiber), and the multicore optical fiber 10 has an image circle 12, a jacket portion 14 that covers an outer periphery of the image circle 12, and a coating layer 16 that covers the outer periphery of the jacket portion 14.

The image circle 12 is a substantially circular pixel region, and the image circle 12 has a configuration in which a plurality of cores 1 penetrate into a common clad 2 in the longitudinal direction of the multicore optical fiber 10 as shown in a partially enlarged part (region surrounded by a two-dot chain line) of FIG. 1. The common clad 2 is shared by the plurality of cores 1. A diameter d of the core 1 and a distance D between centers of two adjacent cores are substantially constant in the entire area of the image circle 12.

Each of the plurality of cores 1 allows propagation of light, and functions as a pixel of an image fiber. The diameter of the image circle 12 is not particularly limited, but is, for example, approximately 800 to 2000 µm. Approximately 5000 to 30000 cores 1 are formed within the image circle 12. With such a configuration, an image formed on one end surface (first end surface) of the multicore optical fiber 10 can be spatially divided and transmitted by the core 1 forming each pixel, and the image can be formed on the other end surface (second end surface). The numerical aperture (NA) of the multicore optical fiber 10 is preferably 0.1 or more and 0.45 or less.

The core 1 is formed of silica glass doped with at least fluorine. The relative refractive index difference of the core 1 with respect to the refractive index of silica (SiO₂) as a reference is, for example, -0.30% to -0.10%. The fluorine concentration of the core 1 is preferably approximately 0.4 to 1.2 wt%. The core 1 may contain a dopant other than fluorine, for example, chlorine of 0.01 ppm or more. Chlorine may be contained in silica glass in the case of manufacturing porous silica glass using chlorides, such as SiCl₄, as a raw material or in the case of using a chlorine compound, such as SOCl₂, for dehydration and sintering of porous silica glass.

Since the core 1 contains fluorine, defects are less likely to be generated in the silica glass even under the radiation environment, and an increase in transmission loss can be suppressed. In a case where silica glass containing no fluorine is irradiated with radiation, defects are generated in the silica glass due to the action of radiation. In particular, a transmission loss increase in the visible light region becomes large. As a result, image observation in the visible light region becomes difficult. Since fluorine has an effect of compensating the defects of silica glass, an increase in transmission loss can be suppressed by using silica glass doped with fluorine. For example, in a case where the radiation dose is 2 MGy (megagray), it is preferable that the amount of increase in transmission loss of the multicore optical fiber 10 be 2 dB/m or less at a wavelength of 400 nm.

In the multicore optical fiber 10 according to the present embodiment, hydrogen may be doped in the glass (at least the core 1 and a peripheral portion of the core 1). In a case where the glass is irradiated with radiation, defects are generated in the glass. This causes an increase in transmission loss in the visible light region. Since hydrogen has an effect of compensating the defects of glass, an increase in transmission loss in the visible light region can be suppressed by doping the glass with hydrogen. As a method of doping hydrogen, there is a method of processing the multicore optical fiber 10 in a high-concentration hydrogen (H₂) atmosphere. In a case where hydrogen penetrates into the multicore optical fiber 10, hydrogen will be doped into the glass including the core 1 and the clad 2.

The diameter d of the core 1 is, for example, in the range of 1.0 to 10 µm. The distance D between centers of the adjacent cores 1 is, for example, in the range of 3.0 to 15 µm. The value of the ratio D/d is, for example, approximately 1.02 to approximately 5.0. As the arrangement of the cores 1 in the image circle 12, there are an arrangement in which the cores 1 are regularly adjacent to the six directions around one core 1 (hexagonal arrangement), an arrangement in which the cores 1 are regularly adjacent to the four directions around one core 1 (square arrangement), and the like. From the viewpoint of suppressing crosstalk, it is preferable that the cores 1 be randomly arranged.

The clad 2 has a refractive index lower than the core 1. As dopants for reducing the refractive index of silica glass, fluorine (F), boron (B), and the like can be mentioned. The clad 2 is preferably formed of silica glass doped with at least fluorine. In addition, it is preferable that the fluorine concentration of the clad 2 be higher than the fluorine concentration of the core 1.

However, in a case where the fluorine concentration of the clad 2 is too high, the fluorine is likely to cause diffusion or gasification by heating. Accordingly, during the manufacturing of the multicore optical fiber 10, bubbles are generated in the image circle 12. This may cause defects in pixels. In the present embodiment, therefore, as shown in part (a) of FIG. 2 and part (b) of FIG. 2, the clad 2 has a two-layer structure including a first clad 4 surrounding the outer periphery of the core 1 and a second clad 3 provided outside the first clad 4, and the refractive index of the second clad 3 is higher than the refractive index of the first clad 4 and lower than the refractive index of the core 1.

The first clad 4 is provided to ensure the relative refractive index difference required for the waveguide structure of the core 1. The relative refractive index difference (Δ) between the first clad 4 and the core 1 is, for example, 0.8% or more. The relative refractive index difference of the first clad 4 with respect to the refractive index of silica (SiO₂) as a reference is, for example, -1.2% to -0.9%. The fluorine concentration of the first clad 4 is approximately 3.6 to 5.0 wt%.

The second clad 3 functions as a barrier layer for suppressing the diffusion of fluorine in a case where fluorine-doped silica glass forming the core 1 and the clad 2 is heated. The relative refractive index difference (Δ) between the second clad 3 and the core 1 is, for example, 0.5% or more. The relative refractive index difference of the second clad 3 with respect to the refractive index of silica (SiO₂) as a reference is, for example, -0.9% to -0.6%. It is preferable that the fluorine concentration of the second clad 3 be lower than the fluorine concentration of the first clad 4. The fluorine concentration of the second clad 3 is approximately 2.4 to 3.5 wt%.

The multicore optical fiber 10 according to the present embodiment can be manufactured by using the following method, for example.

First, an optical fiber preform having a core, a first clad surrounding the outer periphery of the core, and a second clad surrounding the outer periphery of the first clad is manufactured using a vapor-phase axial deposition (VAD) method, a chemical vapor deposition (CVD) method, or the like. The optical fiber preform has a single core on a cross-section of the optical fiber preform. In the optical fiber preform, the ratio of the diameter of the first clad to the diameter of the core is approximately 1.01 to 3.0, and the ratio of the diameter of the second clad to the diameter of the core is approximately 1.02 to 5.0.

Then, a single-core optical fiber having an outer diameter of several tens to several hundreds of micrometers is manufactured by drawing (fiber drawing) the optical fiber preform. By drawing one single-core optical fiber from one optical fiber perform and then cutting the single-core optical fiber at predetermined lengths, it is possible to obtain a number of single-core optical fibers. The glass composition and the diameter ratio of the core, the first clad, and the second clad in the single-core optical fiber are the same as the glass composition and the diameter ratio in the optical fiber perform.

As shown in part (a) of FIG. 3 and part (b) of FIG. 3, a single-core optical fiber 5 has the core 1 at the center, the first clad 4 at the outer periphery of the core 1, and the second clad 3 at the outermost layer, and the refractive index of the second clad 3 is higher than the refractive index of the first clad 4 and lower than the refractive index of the core 1.

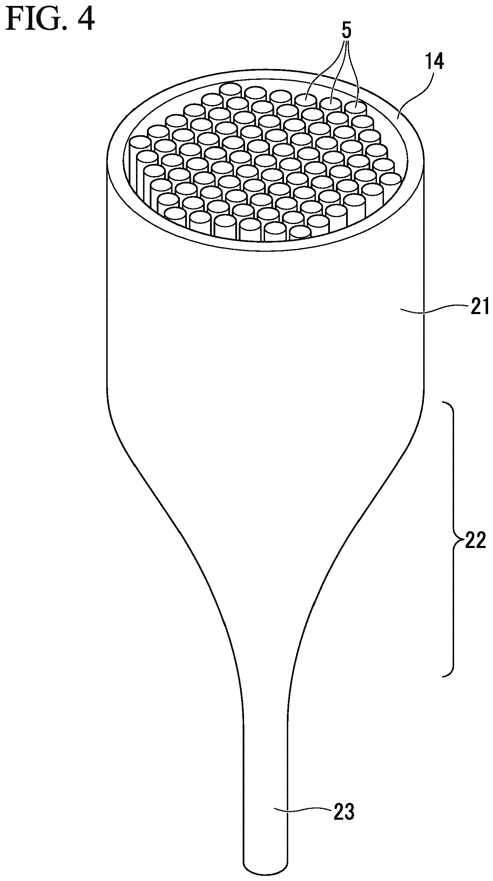

Then, a plurality of single-core optical fibers 5 are arranged in a glass tube (jacket tube) serving as the jacket portion 14. Then, as shown in FIG. 4, the clad 2 of each single-core optical fiber 5 is collapsed by melting and elongating the single-core optical fiber and the jacket tube. The multicore optical fiber 10 obtained by the elongation is wound around a bobbin to become a product. It is also possible to perform post-processing, such as hydrogen atmosphere processing, on the multicore optical fiber 10.

FIG. 4 schematically shows a manner in which the jacket portion 14, in which a number of single-core optical fibers 5 are housed, gradually elongates from a large diameter portion 21 to a reduced diameter portion 23 through a taper portion 22. In the schematic diagram, size ratios, angles, and the like may be different from actual ones. Elongation is not limited to one step, but can be performed in two or more steps.

The distribution of the first clad 4 and the second clad 3 in the clad 2 of the obtained multicore optical fiber 10 does not necessarily need to be uniform in a case where this is obtained as a result of melting and collapsing, and it is preferable that the first clad 4 be interposed between the second clad 3 and the core 1. Although part (a) of FIG. 2 shows a state in which the each of first clads 4 is formed separately from each of the cores 1 and the second clad 3 is shared by a number of cores 1 and is formed continuously, the present invention is not limited thereto.

It is preferable that the coating layer 16 formed of resin or the like be provided on the outer periphery of the multicore optical fiber 10 collapsed in the reduced diameter portion 23. As materials of the coating layer 16, resins, such as polyimide, silicone, epoxy, and acryl, can be mentioned.

As materials of the jacket portion 14, pure silica glass or silica glass containing an additive (dopant) can be mentioned.

Since the multicore optical fiber 10 according to the present embodiment has an excellent radiation resistance property, the multicore optical fiber 10 according to the present embodiment can also be used in facilities where radioactive materials are handled, such as nuclear power plants, or space influenced by cosmic rays, such as outer space. Since the transmission loss increase amount in the visible light region is low, transmission of a color image is also possible.

While the present invention has been described based on the preferred embodiment, the present invention is not limited to the above embodiment, but various modifications can be made without departing from the scope of the present invention.

The shape of a pixel region including a number of cores is not limited to the image circle having a circular cross-section, but can have various cross-sectional shapes, such as a square, a hexagon, a polygon, an ellipse, a semicircle, and a fan.

A light guide for transmitting illumination light in a direction opposite to the image transmission direction can be provided in the image fiber.

Each portion of the core, the first clad, and the second clad may have a substantially uniform composition or refractive index, or may further have a distribution within a predetermined range inside each portion. In manufacturing, each portion of the core, the first clad, and the second clad may be formed in one step, or one portion may be formed by two or more steps (two or more layers) of laminations.

### [Examples]

Hereinafter, the present invention will be specifically described by way of examples.

### (Example 1)

A multicore optical fiber was manufactured by drawing a single-core optical fiber formed of fluorine-doped silica glass and having three layers of a core, a first clad, and a second clad, housing a number of single-core optical fibers in a jacket tube formed of pure silica glass, and collapsing the jacket tube onto the single-core optical fibers by melting and elongation. The multicore optical fiber was manufactured so that the refractive index of the second clad was lower than the refractive index of the core and higher than the refractive index of the first clad. The difference in the refractive indices of the core, the first clad, and the second clad was caused by the difference in fluorine concentration. The diameter ratio of respective portions in the single-core optical fiber was core : first clad : second clad = 1.0 : 1.3 : 1.5.

### (Comparative Example 1)

A multicore optical fiber was manufactured by drawing a single-core optical fiber having two layers of a core formed of pure silica glass and a clad formed of fluorine-doped silica glass, housing a number of single-core optical fibers in a jacket tube formed of pure silica glass, and collapsing the jacket tube onto the single-core optical fibers by melting and elongation. The multicore optical fiber was manufactured so that the refractive index of the clad was lower than the refractive index of the core.

### (Radiation resistance property: Example 1 and Comparative Example 1)

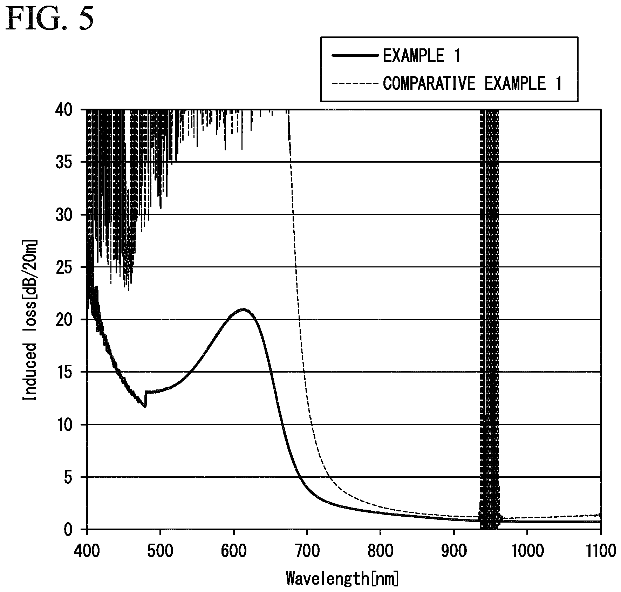

The multicore optical fiber of Example 1 and the multicore optical fiber of Comparative Example 1 were irradiated with radiation until the radiation dose reached 2 MGy. The amount of increase in transmission loss due to irradiation with radiation was calculated by calculating the difference in transmission loss measured before and after irradiation with radiation. FIG. 5 shows a graph of the amount of increase in transmission loss (Induced loss) with respect to a wavelength.

In the multicore optical fiber of Comparative Example 1, the amount of increase in transmission loss was as high as approximately 20 dB/20 m or more (approximately 1 dB/m or more) in the entire visible light region where the wavelength was approximately 700 nm or less. At the wavelength of 400 nm, the amount of increase in transmission loss of the multicore optical fiber of Comparative Example 1 was 40 dB/20 m or more (approximately 2 dB/m or more).

In contrast, in the multicore optical fiber of Example 1, the transmission loss increase amount was as low as approximately 30 dB/20m or less (approximately 1.5 dB/m or less) in a wavelength region of approximately 400 to 900 nm, and was 30 dB/20m or less (approximately 1.5 dB/m or less) at the wavelength of 400 nm. Therefore, image transmission in the visible light region was possible by using the multicore optical fiber of Example 1 even after irradiation with radiation of the radiation dose of 2 MGy.

### (Reference Example)

A multicore optical fiber was manufactured by drawing a single-core optical fiber having two layers of a core formed of fluorine-doped silica glass and a clad (corresponding to the first clad of Example 1) formed of fluorine-doped silica glass, housing a number of single-core optical fibers in a jacket tube formed of pure silica glass, and collapsing the jacket tube onto the single-core optical fibers by melting and elongation. The multicore optical fiber was manufactured so that the refractive index of the clad was lower than the refractive index of the core.

In the manufacturing of the multicore optical fiber of the reference example, foaming occurred due to diffusion and gasification of fluorine at the time of collapsing the jacket tube onto the single-core optical fibers. As a result, a pixel defect occurred. However, as in Example 1, since the multicore optical fiber was a multicore optical fiber in which both the core and the clad were formed of silica glass doped with at least fluorine, the multicore optical fiber had an excellent radiation resistance property. Therefore, even after irradiation with radiation of the radiation dose of 2 MGy, image transmission in the visible light region was possible.

### (Example 2)

In the same manner as in Example 1, a multicore optical fiber in which fluorine was doped into both the core and the clad was manufactured. Hydrogen was doped into the glass of the multicore optical fiber under the conditions of a hydrogen concentration of 100%, a temperature of 60°C, a pressure of 5 atm, and a time of 168 hours. Example 2A is a multicore optical fiber before hydrogen doping, Example 2B is a multicore optical fiber after hydrogen doping, and Example 2 is a general term for both Example 2A and Example 2B.

### (Comparative Example 2)

A multicore optical fiber having a pure silica core was manufactured in the same manner as in Comparative Example 1.

### (Radiation resistance property: Example 2 and Comparative Example 2)

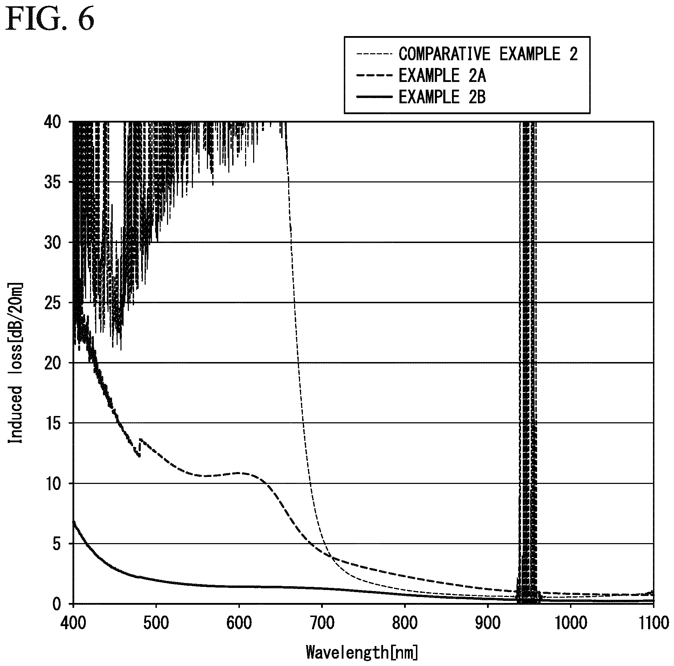

Each of the multicore optical fiber of Example 2A, the multicore optical fiber of Example 2B, and the multicore optical fiber of Comparative Example 2 was irradiated with gamma (γ) rays using Co60 as a radiation source under the conditions of a dose rate of 10 kGy/h, an irradiation time of 18 hours, and a total dose of 180 kGy. The amount of increase in transmission loss due to irradiation with radiation was calculated by calculating the difference in transmission loss of each multicore optical fiber measured before and after irradiation of gamma rays. FIG. 6 shows a graph of the amount of increase in transmission loss (Induced loss) with respect to a wavelength.

In the multicore optical fiber of Comparative Example 2, the amount of increase in transmission loss was as high as approximately 20 dB/20 m or more (approximately 1 dB/m or more) in the entire visible light region where the wavelength was approximately 700 nm or less. At the wavelength of 400 nm, the amount of increase in transmission loss of the multicore optical fiber of Comparative Example 2 was 40 dB/20 m or more (approximately 2 dB/m or more).

In contrast, the multicore optical fiber of Example 2A using the fluorine-doped core shows a small transmission loss increase amount in the wavelength region of approximately 400 to 900 nm, and has an excellent radiation resistance property.

The hydrogen-doped multicore optical fiber of Example 2B shows a very small transmission loss increase amount in the wavelength region of approximately 400 to 900 nm, and has an excellent radiation resistance property.

### DESCRIPTION OF REFERENCE NUMERAL

1: core
2: clad
3: second clad
4: first clad
5: single-core optical fiber
10: multicore optical fiber
12: image circle
14: jacket portion
16: coating layer
21: large diameter portion
22: taper portion
23: reduced diameter portion

## Claims

1. A multicore optical fiber, comprising:
a core which is formed of silica glass doped with at least fluorine, the core having a relative refractive index difference with respect to a refractive index of silica as a reference being -0.30% to -0.10%; and
a clad that is formed of silica glass doped with at least fluorine, the clad including a first clad surrounding an outer periphery of the core and a second clad provided outside the first clad,
wherein a relative refractive index difference between the first clad and the core is 0.8% or more, and
a refractive index of the second clad is higher than a refractive index of the first clad and lower than a refractive index of the core.

2. The multicore optical fiber according to claim 1,
wherein at least one of the core and the clad is doped with hydrogen.

3. The multicore optical fiber according to claim 1 or 2,
wherein a fluorine concentration of the core is 0.4 to 1.2 wt%.

4. The multicore optical fiber according to any one of claims 1 to 3,
wherein a diameter of the core is 1.0 to 10 µm, and
a distance between centers of adjacent cores is 3.0 to 15 µm.

5. The multicore optical fiber according to any one of claims 1 to 4,
wherein a transmission loss increase amount in a case where a radiation dose is 2 MGy is 2 dB/m or less at a wavelength of 400 nm.

6. The multicore optical fiber according to any one of claims 1 to 5,
wherein a numerical aperture is 0.1 or more and 0.45 or less.

7. A method of producing the multicore optical fiber according to any one of claims 1 to 6, comprising:
preparing a single-core optical fiber having a core and a clad, the clad including a first clad surrounding an outer periphery of the core and a second clad surrounding an outer periphery of the first clad, the second clad being an outermost layer;
preparing a plurality of the single-core optical fibers and arranging the plurality of the single-core optical fibers in a jacket tube; and
obtaining a multicore optical fiber by collapsing the jacket tube onto each of clads in the plurality of the single-core optical fibers by melting and elongating the plurality of the single-core optical fibers and the jacket tube.
